# EUROPÄISCHE PATENTANMELDUNG

(11) **EP 2 192 029 A1**
(43) Veröffentlichungstag der Anmeldung: **02.06.2010**
(21) Anmeldenummer: 09169000.8
(22) Anmeldetag: 31.08.2009
(51) Int. Cl.: B62D 55/02

(54) **Landwirtschaftliche Zugmaschine**

(30) Priorität: 28.11.2008 DE 102008059466
(71) Anmelder: CLAAS Selbstfahrende Erntemaschinen GmbH, 33428 Harsewinkel (DE)
(72) Erfinder: Kleinemenke, Heinrich, 33428, Harsewinkel (DE)

(57) **Zusammenfassung**

Die Karosserie (1, 2) einer landwirtschaftlichen Zugmaschine ist in ihrem Frontbereich von einer lenkbaren Vorderachse und in ihrem Heckbereich von einem Raupenfahrwerk (4) getragen. Das Raupenfahrwerk (4) ist lenkbar mit der Karosserie (1, 2) verbanden.

## Beschreibung

Die vorliegende Erfindung betrifft eine landwirtschaftliche Zugmaschine mit einer lenkbaren Vorderachse und einem heckseitigen Raupenfahrwerk. Eine solche Zugmaschine ist aus EP 0 000 211 D1 bekannt.

Die Verwendung eines Raupenfahrwerks anstelle einer Achse mit Einzelrädern ermöglicht die Verteilung der Achslast auf eine wesentlich größere Bodenfläche. Daher wird zweckmäßigerweise diejenige Achse durch ein Raupenfahrwerk ersetzt, die die größere Last zu tragen hat.

Ein Problem ergibt sich jedoch aus dem großen Richtungsbeharrungsvermögen eines solchen Raupenfahrwerks. Um seine Fahrtrichtung zu ändern, müssen die Raupenketten zum Teil quer zu ihrer Laufrichtung über den Untergrund verschoben werden, was ein beträchtliches Drehmoment erfordert. Beim Kurvenfahren neigt ein Fahrzeug mit Raupenfahrwerk im Heck daher stark zum Untersteuern, der Kurvenradius ist erheblich größer als dem Einschlagwinkel der Vorderräder entspricht, und diese pflügen über den Boden, wenn sie vom Raupenfahrwerk vorgeschoben werden. Wenn das zum Drehen des Raupenfahrwerks benötigte Drehmoment von der lenkbaren Vorderachse aufgebracht werden muss, darf deren Achslast nicht zu gering sein. Die Heckachslast einer landwirtschaftlichen Zugmaschine ist in der Praxis variabel, da das Heck der Zugmaschine einerseits statisch durch ein aufliegendes Werkzeug oder einen aufliegenden Anhänger belastet sein kann, zum anderen kann sich eine dynamische Verschiebung der Achslast ergeben, wenn die Maschine eine hohe Zugkraft an einer Anhängerkupplung ausübt. Aus dieser Zugkraft resultiert ein Drehmoment, welches die Achslast am Heck steigert und am Bug vermindert, so dass bei starker Zugbelastung die Lenkbarkeit der Maschine verloren gehen kann.

Aufgabe der Erfindung ist, die Lenkbarkeit einer landwirtschaftlichen Zugmaschine mit Raupenfahrwerk zu verbessern.

Die Aufgabe wird gelöst, indem bei einer Zugmaschine mit einer in ihrem Frontbereich von einer lenkbaren Vorderachse und in ihrem Heckbereich von einem Raupenfahrwerk getragenen Karosserie das Raupenfahrwerk lenkbar mit der Karosserie verbunden ist. So ist ein großer Winkel zwischen den Laufrichtungen der Vorderräder und des Raupenfahrwerks realisierbar, und es kann ein hohes Drehmoment zum Drehen des Raupenfahrwerks erzeugt werden.

Da ein Raupenfahrwerk aufgrund seiner Länge für eine Lenkbewegung im Allgemeinen mehr Bewegunsgfreiheit in seitlicher Richtung benötigt als einzelne Räder und bei dem Raupenfahrwerk anders als bei Einzelrädern ein großer Durchmesser nicht erforderlich ist, um eine große Bodenkontaktfläche zu schaffen, ist es zweckmäßig, dass die Rollen des Raupenfahrwerks kleiner sind als die Räder der Vorderachse. So kann das Raupenfahrwerk flach gebaut werden, und die für seine Lenkbewegung erforderliche Bewegungsfreiheit kann konstruktiv einfach bereit gestellt werden.

Die lenkbare Verbindung zwischen der Karosserie und dem Raupenfahrwerk ist vorzugsweise durch einen Drehschemel gebildet. Der Drehschemel ermöglicht eine konstruktiv einfache Übertragung von Antriebskraft von einem karosseriefesten Motor der Zugmaschine auf die Rollen des Raupenfahrwerks.

Um die Drehbewegung des Raupenfahrwerks relativ zur Karosserie zu ermöglichen und zu führen, ist zwischen der Karosserie und dem Drehschemel vorzugsweise ein Lenkkranz vorgesehen. Eine Antriebswelle zur Übertragung der Antriebskräfte auf die Rollen kann dann entlang einer Achse des Lenkkranzes verlaufen. Auch dies vereinfacht die Kraftübertragung auf die Rollen.

Ein Kraftheber für die Handhabung eines gezogenen Werkzeugs oder Anhängers ist vorzugsweise am Drehschemel montiert. So wird ein Ausschwenken des Krafthebers bei Kurvenfahrt vermieden, und das Werkzeug oder der Anhänger können keine Kräfte auf die Zugmaschine ausüben, die einer Schwenkbewegung der Karosserie in Bezug auf das Raupenfahrwerk entgegen wirken.

Aus dem gleichen Grund ist es auch zweckmäßig, eine Anhängung für ein Werkzeug oder ein gezogenes Fahrzeug am Drehschemel anzubringen.

Alternativ zur Drehschemellenkung kann auch vorgesehen sein, dass das Raupenfahrwerk zwei Raupenschiffe umfasst, die bezüglich der Karosserie um zwei voneinander beabstandete vertikale Achsen schwenkbar sind. Eine solche Konstruktion ermöglicht es, den Hub der beiden Raupenschiffe in Fahrtrichtung bei einem Lenkmanöver im Vergleich zu einer Drehschemellenkung zu verkleinern und dadurch die Einschlagbewegungsfreiheit der Raupenschiffe zu vergrößern.

Vorzugsweise sind zwei Raupenschiffe des Raupenfahrwerks mit unterschiedlichen Geschwindigkeiten antreibbar, um sicher zu stellen, dass ein Drehmoment, welches die Zugmaschine in eine Kurvenbahn zwingt, auch dann, wenn der von der Vorderachse getragene Anteil des Gewichts der Maschine klein ist gegenüber dem von dem Raupenfahrwerk getragenen, in ausreichender Höhe erzeugt werden kann.

Es kommen unterschiedliche Bauformen für die Raupenschiffe des Raupenfahrwerks in Betracht. Einer ersten Bauform zufolge ist von den zwei Umlenkrollen jedes Raupenschiffs des Raupenfahrwerks wenigstens eine angetrieben. Die Umlenkrollen sind zur Übertragung von Antriebskraft auf die Antriebsbänder besonders gut geeignet, da sie von diesen auf einen großen Teil ihres Umfangs umschlungen sind. Wenn ein Raupenschiff außer den zwei Umlenkrollen keine weiteren Rollen umfasst, oder wenn zwischen den Umlenkrollen nur Stützrollen angebracht sind, die einen kleineren Durchmesser als die Umlenkrollen haben, dann beträgt die Umschlingung durch das Raupenband an jeder Umlenkrolle zirka 180 Grad.

Einer alternativen Ausgestaltung zufolge hat jedes Raupenschiff des Raupenfahrwerks eine zentrale angetriebene Rolle und davor und dahinter je eine antriebslose Umlenkrolle. Ein Vorteil dieser Konstruktion liegt darin, dass die Achse der angetriebenen Rollen der zwei Raupenschiffe die Schwenkachse des Drehschemels kreuzt oder zumindest in geringer Entfernung von dieser verlaufen kann, was die Übertragung von Antriebskraft vom Motor auf die gemeinsame Welle vereinfacht. Dies ist insbesondere dann vorteilhaft, wenn auf dem Raupenfahrwerk ein Drehschemel angebracht ist.

Um bei den Raupenschiffen mit zentraler Antriebsrolle eine sichere Kraftübertragung von der angetriebenen Rolle auf das Raupenband zu gewährleisten, ist es zweckmäßig, wenn die zentrale angetriebene Rolle einen größeren Durchmesser als die zwei Umlenkrollen hat. Ein weiterer Vorteil kleiner Umlenkrollen liegt darin, dass diejenigen Teile des Raupenfahrwerks, die bei einer Lenkbewegung besonders weit nach vorn, nach hinten oder zur Seite ausgreifen, eine besonders geringe Höhe aufweisen und daher leichter als eine größere Umlenkrolle unter die Karosserie einrücken oder in eine hierfür vorgesehene Aussparung der Karosserie einrücken können. Daher ist mit einem solchen Raupenfahrwerk in der Regel das Fahren von engeren Kurven möglich als mit einem Raupenfahrwerk gleicher Länge, bei dem eine der Umlenkwalzen unter die Karosserie oder in eine hierfür vorgesehene Aussparung der Karosserie eingreift.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht einer erfindungsgemäßen landwirtschaftlichen Zugmaschine;
- Fig. 2: eine schematische Draufsicht auf das Raupenfahrwerk der Zugmaschine der Fig. 1;
- Fig. 3: eine Draufsicht auf die Zugmaschine der Fig. 1 beim Kurvenfahren mit angekoppeltem Anhänger;
- Fig. 4: eine Draufsicht auf die Maschine im sogenannten Hundegang;
- Fig. 5: eine zu Fig. 1 analoge Seitenansicht gemäß einer zweiten Ausgestaltung der Erfindung; und
- Fig. 6: eine Draufsicht auf eine Zugmaschine gemäß einer dritten Ausgestaltung bei der Kurvenfahrt.

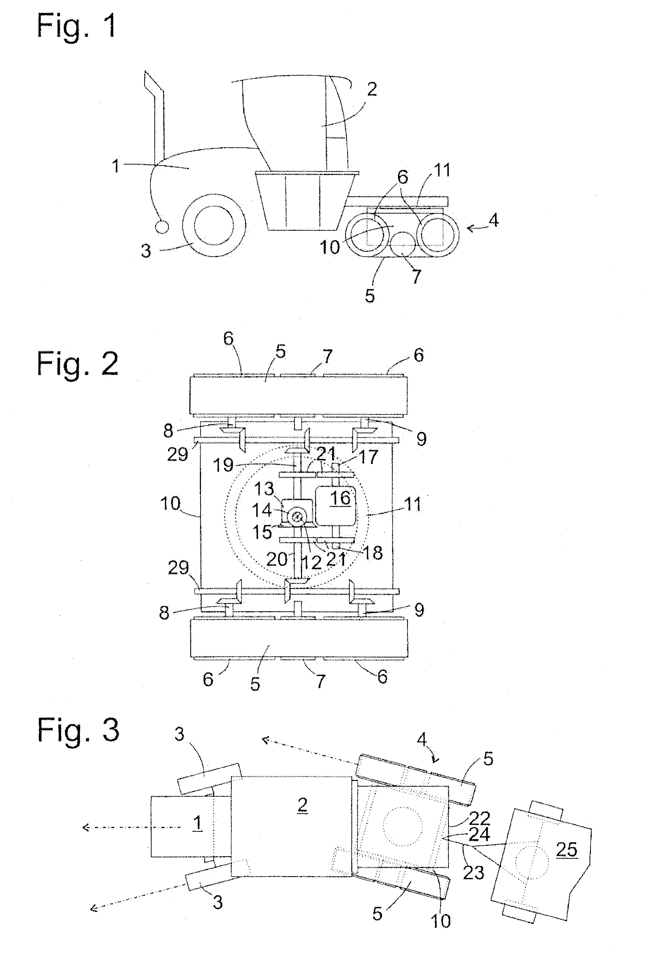

Fig. 1 zeigt eine stark schematisierte Seitenansicht einer landwirtschaftlichen Zugmaschine gemäß einer ersten Ausgestaltung der Erfindung. Eine Karosserie mit Motorgehäuse 1 und Fahrerkabine 2 ist einerseits von einer Vorderachse mit zwei lenkbaren Rädern 3 und andererseits in ihrem hinteren Bereich von einem zweischiffigen Raupenfahrwerk 4 getragen. Jedes Schiff des Fahrwerks 4 umfasst in an sich bekannter Weise zwei von einem Raupenband 5 umschlungene Umlenkrollen 6. Zwischen den Umlenkrollen ist eine Stützrolle 7 dargestellt, deren Durchmesser kleiner als der der Umlenkrollen 6 ist. Sie dienen dazu, das Gewicht der Zugmaschine und eines in Fig. 1 nicht dargestellten, eventuell angekoppelten Werkzeugs oder Anhängers gleichmäßig über die Bodenkontaktfläche des Raupenbands 5 zu verteilen, und je nach zu verteilender Last oder zur Verfügung stehendem Einbauraum des Raupenfahrwerks 4 kann die Zahl der Stützrollen 7 auch Null oder größer als 1 sein.

Die Stützrolle 7 ist nicht eigens angetrieben; sie wird vom umlaufenden Raupenband 5 in Drehung mitgenommen. Durch den Motor angetrieben ist wenigstens eine der beiden Umlenkrollen 6 jedes Raupenschiffs.

Gemeinsame Achsen 8 bzw. 9 der vorderen beziehungsweise hinteren Umlenkrollen 6 der beiden Raupenschiffe sind in einem hier schematisch als rechteckiger Kasten dargestellten Drehschemel 10 gelagert.

Eine vertikale Drehachse des Drehschemels 10 in Bezug auf die Karosserie ist festgelegt durch einen Drehkranz 11 mit einem karosseriefesten und einem drehschemelfesten Laufring und dazwischen angeordneten Wälzkörpern. Das freie Innere des Drehkranzes 11 bietet Platz für die Durchführung von Getriebeteilen, die zur Übertragung von Motordrehmoment auf eine oder beide Achsen 8, 9 benötigt werden.

Fig. 2 zeigt eine schematische Draufsicht auf die Getriebeteile im Innern des Drehschemels 10. Hier dient zur Drehmomentübertragung eine vertikal auf der Drehachse des Drehkranzes 11 liegende Welle 12. Unterhalb der Welle 12 ist ein Differenzialgetriebe 13 angeordnet, das über zwei Kegelräder 14, 15 von der Welle 12 angetrieben ist. Vom Differentialgetriebe 13 abgehende Abtriebswellen 19, 20 treiben über weitere Paare von Kegelrädern und Längswellen 29 wenigstens eine der beiden Achsen 8 und 9, im hier dargestellten Fall beide Achsen 8, 9, an.

Einer weiterentwickelten Ausgestaltung zufolge ist ein Getriebe 16 mit verstellbarer Übersetzung neben dem Differenzialgetriebe 13 angeordnet und hat zwei zueinander koaxiale Wellen 17, 18, die sich parallel zu den Abtriebswellen 19, 20 des Differenzialgetriebes 13 erstrecken. Die Abtriebswellen 19, 20 und die Wellen 17, 18 tragen miteinander kämmende Zahnradpaare 21. Bei Geradeausfahrt befindet sich das Getriebe 16 in einem Neutralzustand, in dem die Wellen 17, 18 frei gegeneinander drehbar sind.

Das Getriebe 16 kann ein Schaltgetriebe mit zwei diskreten Gängen, deren Übersetzungsverhältnisse invers zueinander sind, und einer Kupplung sein. Um eine Fahrtrichtungsänderung des Raupenfahrwerks nach links oder nach rechts zu unterstützen, wird der eine oder der andere der beiden Gänge des Getriebes eingelegt, und die Kupplung schließt mit einem mit dem Ausmaß der Auslenkung in die eine oder andere Richtung zunehmenden Schließkraft. Die infolge dessen unterschiedlich schnell umlaufenden Raupenbänder 5 erzeugen in Kontakt mit dem Boden ein Drehmoment.

Anstelle eines Schaltgetriebes mit diskreten Gängen kann auch ein stufenlos veränderliches Getriebe als Getriebe 16 vorgesehen werden, zum Beispiel ein Kegelradgetriebe oder ein hydrostatischer Wandler, dessen Übersetzung jeweils proportional zu einem vom Fahrer gewünschten Kurvenradius verstellbar ist.

Fig. 3 zeigt eine Draufsicht auf die Zugmaschine der Fig. 1 bei Kurvenfahrt. Beim Eintritt in eine Kurve werden die Vorderräder 3 und das Raupenfahrwerk 4 in Bezug zur Längsrichtung der Karosserie in jeweils entgegen gesetzte Richtungen eingeschlagen.

Im Verhältnis zu einer Zugmaschine mit nicht lenkbarem Raupenfahrwerk im Heck ist so eine erhebliche größere Abweichung zwischen den Fahrtrichtungen der Vorderräder 3 und des Raupenfahrwerks realisierbar. Auch bei einer einfachen Ausgestaltung der Zugmaschine ohne das oben beschriebene Getriebe 16 resultiert aus der starken Schrägstellung der Vorderräder 3 eine vergrößerte Seitwärtskraft, wenn diese vom Raupenfahrwerk 4 vorwärts geschoben werden, so dass ein deutlich engerer Kurvenradius resultiert als bei einem nicht lenkbaren Raupenfahrwerk.

Bei der Ausgestaltung mit Getriebe 16 ist eine auf die Vorderräder 3 wirkende Seitwärtskraft nicht mehr zwingend erforderlich, um die Zugmaschine in einer Kurve zu führen. Wenn die Geschwindigkeitsdifferenz zwischen den zwei Raupenbändern 5 des Fahrwerks 4 groß genug ist, kann es sogar zu einer Richtungsumkehr der Seitwärtskraft an den Vorderrädern 3 kommen. Um die Bodenbeanspruchung zu minimieren, ist die Geschwindigkeitsdifferenz zwischen den Raupenbändern 5 zweckmäßigerweise so eingestellt, dass der Boden nur eine geringe zum Mittelpunkt der gefahrenen Kurve hin gerichtete Seitwärtskraft an den Rädern 3 ausübt.

Fig. 3 zeigt, dass, wenn beim Kurvenfahren das Raupenfahrwerk 4 in Bezug auf die Karosserie geschwenkt wird, das Heck 22 der Karosserie nach außen ausschwenkt. Wenn eine Deichsel 23 eines Anhängers 25 an einer Aufhängung des Hecks 22 befestigt wäre, so würde sie der Ausschwenkbewegung folgen und den Anhänger 25 aus der Kurve heraus lenken. Um dies zu vermeiden, ist eine Anhängung 24 für die Deichsel 23 am Drehschemel 10 vorgesehen. So kann der Anhänger 25 dem Raupenfahrwerk 4 folgen, ohne aus der Kurve heraus gelenkt zu werden, und Reibungsverluste beim Ziehen des Anhängers 25 in Kurven werden minimiert. Aus analogen Gründen ist auch ein in Fig. 3 aus Gründen der Übersichtlichkeit halber nicht dargestellter Kraftheber am Drehschemel 10 montiert.

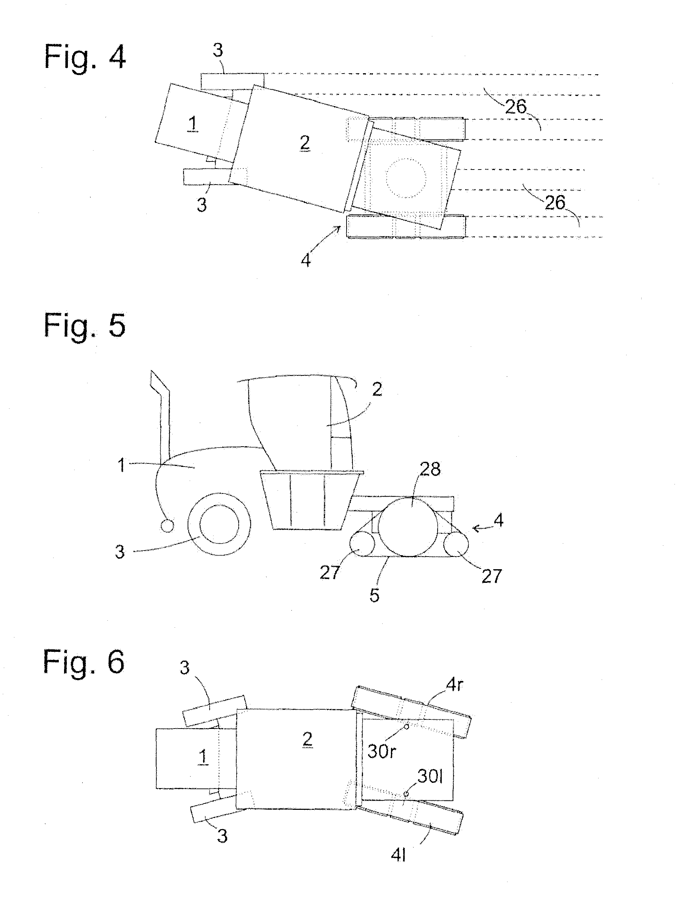

Fig. 4 zeigt eine Draufsicht auf die Zugmaschine in einem zweiten Fahrbetriebsmodus. In diesem Modus weichen die Fahrtrichtungen der Vorderräder 3 und des Raupenfahrwerks 4 jeweils in gleicher Richtung und um den gleichen Betrag von der Längsrichtung der Karosserie ab. In diesem auch als Hundegang bezeichneten Modus fährt die Zugmaschine geradeaus, allerdings steht die Karosserie schräg zur Fortbewegungsrichtung der Zugmaschine, und von den Rädern 3 beziehungsweise den Schiffen des Raupenfahrwerks 4 befahrene Spuren 26 sind parallel gegeneinander verschoben.

Die in Fig. 5 gezeigte Seitenansicht einer Zugmaschine unterscheidet sich von derjenigen der Fig. 1 durch den Aufbau des Raupenfahrwerks 4. Jedes Raupenband 5 umschlingt hier zwei relativ kleinformatige, nicht angetriebene Umlenkrollen 27 und eine zwischen den Umlenkrollen 27 angeordnete zentrale Antriebsrolle 28, deren Durchmesser deutlich größer als derjenige der Umlenkrollen 27 ist. Das Raupenband 5 berührt die Antriebsrolle 28 oben und unten, und insbesondere im oberen Bereich der Antriebsrolle 28 umschlingt es die Rolle 28 eng auf einem beträchtlichen Stück ihres Umfangs, so dass die Antriebskraft der Rolle 28 wirksam auf das Raupenband 5 übertragen werden kann. Dieser Aufbau ermöglicht eine beträchtliche Vereinfachung des Getriebes im Inneren des Drehschemels 10 im Vergleich zum in Fig. 2 Gezeigten. Die Längswellen 29 können komplett entfallen, statt dessen treiben die Abtriebswellen 19, 20 des Differenzialgetriebes 13 die Antriebsrollen 28 unmittelbar an.

Fig. 6 zeigt eine Draufsicht auf eine Abwandlung der Zugmaschine aus Fig. 1, bei der der Drehschemel 10 durch Einzelaufhängungen der zwei Raupenschiffe des Fahrwerks 4 ersetzt ist, bei der jedes Schiff 41, 4r um eine eigene, ihm eng benachbarte vertikale Achse 301, 30r schwenkbar ist. Diese Ausgestaltung verringert die mit jeder Drehung zwischen Karosserie und Raupenfahrwerk 4 verbundene Auslenkung der Raupenschiffe in Vorwärts- beziehungsweise Rückwärtsrichtung, und ermöglicht so am Raupenfahrwerk 4 große Einschlagwinkel.

### Bezugszeichen

- 1: Motorgehäuse
- 2: Fahrerkabine
- 3: Rad
- 4: Raupenfahrwerk
- 5: Raupenband
- 6: Umlenkrollen
- 7: Stützrolle
- 8: Achse
- 9: Achse
- 10: Drehschemel
- 11: Drehkranz
- 12: Welle
- 13: Differenzialgetriebe
- 14: Kegelräder
- 15: Kegelräder
- 16: Getriebe
- 17: Wellen
- 18: Welle
- 19: Abtriebswellen
- 20: Abtriebswellen
- 21: Zahnradpaare
- 22: Heck
- 23: Deichsel
- 24: Anhängung
- 25: Anhänger
- 26: Spur
- 27: Umlenkrolle
- 28: Rolle
- 29: Längswelle
- 30: Achse

## Patentansprüche

1. Landwirtschaftliche Zugmaschine mit einer in ihrem Frontbereich von einer lenkbaren Vorderachse und in ihrem Heckbereich von einem Raupenfahrwerk (4) getragenen Karosserie (1, 2), **dadurch gekennzeichnet, dass** das Raupenfahrwerk (4) lenkbar mit der Karosserie (1, 2) verbunden ist.

2. Landwirtschaftliche Zugmaschine nach Anspruch 1, **dadurch gekennzeichnet, dass** die Rollen (6, 7) des Raupenfahrwerks (4) kleiner sind als die Räder (3) der Vorderachse.

3. Landwirtschaftliche Zugmaschine nach Anspruch 1 oder 2, **dadurch gekennzeichnet, dass** die Verbindung zwischen der Karosserie (1, 2) und dem Raupenfahrwerk (4) durch einen Drehschemel (10) gebildet ist.

4. Landwirtschaftliche Zugmaschine nach Anspruch 3, **dadurch gekennzeichnet, dass** zwischen der Karosserie (1, 2) und dem Drehschemel (10) ein Lenkkranz (11) vorgesehen ist.

5. Landwirtschaftliche Zugmaschine nach Anspruch 4, **dadurch gekennzeichnet, dass** eine Antriebswelle (12) entlang einer Achse des Lenkkranzes (11) verläuft.

6. Landwirtschaftliche Zugmaschine nach einem der Ansprüche 3 bis 5, **dadurch gekennzeichnet, dass** ein Kraftheber am Drehschemel (10) montiert ist.

7. Landwirtschaftliche Zugmaschine nach einem der Ansprüche 3 bis 6, **dadurch gekennzeichnet, dass** eine Anhängung (24) für ein gezogenes Fahrzeug oder Werkzeug am Drehschemel (10) montiert ist.

8. Landwirtschaftliche Zugmaschine nach Anspruch 1 oder 2, **dadurch gekennzeichnet, dass** das Raupenfahrwerk (4) zwei Raupenschiffe (41, 4r) umfasst, die bezüglich der Karosserie um zwei voneinander beabstandete vertikale Achsen schwenkbar sind.

9. Landwirtschaftliche Zugmaschine nach einem der vorhergehenden Ansprüche, **dadurch gekennzeichnet, dass** zwei Raupenschiffe (41, 4r) des Raupenfahrwerks (4) mit unterschiedlichen Geschwindigkeiten antreibbar sind.

10. Landwirtschaftliche Zugmaschine nach einem der vorhergehenden Ansprüche, **dadurch gekennzeichnet, dass** von zwei Umlenkrollen jedes Raupenschiffs (41, 4r) des Raupenfahrwerks wenigstens eine angetrieben ist.

11. Landwirtschaftliche Zugmaschine nach einem der Ansprüche 1 bis 9, **dadurch gekennzeichnet, dass** jedes Raupenschiff (41, 4r) des Raupenfahrwerks (4) eine zentrale angetriebene Rolle (28) und zwei antriebslose Umlenkrollen (27) aufweist.
